# EUROPEAN PATENT SPECIFICATION

(11) **EP 3 050 728 B1**
(45) Date of publication and mention of the grant of the patent: **10.07.2019**
(21) Application number: 16153277.5
(22) Date of filing: 29.01.2016
(51) Int. Cl.: B60J 7/00, B60J 10/25, B60J 10/90

(54) **SEALING STRUCTURE FOR NON-FIXED TYPE ROOF**
DICHTUNGSSTRUKTUR FÜR NICHT FESTSTEHENDES DACH
STRUCTURE D'ÉTANCHÉITÉ POUR TOIT DE TYPE NON FIXE

(30) Priority: 02.02.2015 JP 2015018835
(43) Date of publication of application: 03.08.2016
(73) Proprietor: Nishikawa Rubber Co., Ltd., Hiroshima-shi, Hiroshima-ken (JP); HONDA MOTOR CO., LTD., Tokyo, 107-8556 (JP)
(72) Inventor: Matsuura, Toshifumi, Hiroshima (JP); Suesada, Ryo, Saitama, 351-0193 (JP); Soda, Masaki, Saitama, 351-0193 (JP); Ishikawa, Takeshi, Saitama, 351-0193 (JP)
(74) Representative: Scholz, Volker

(56) References cited:
- EP-A2- 2 468 551
- EP-A2- 2 468 552
- DE-A1- 19 943 765
- JP-A- 2010 047 194
- US-A- 5 209 546
- US-A1- 2006 125 292
- US-A1- 2012 161 467

## Description

### BACKGROUND INFORMATION

The present invention relates to sealing structures for non-fixed type roofs including detachable roofs and soft tops. Document EP 2 468 551 represents the closest prior art and discloses the preamble of independent claim 1.

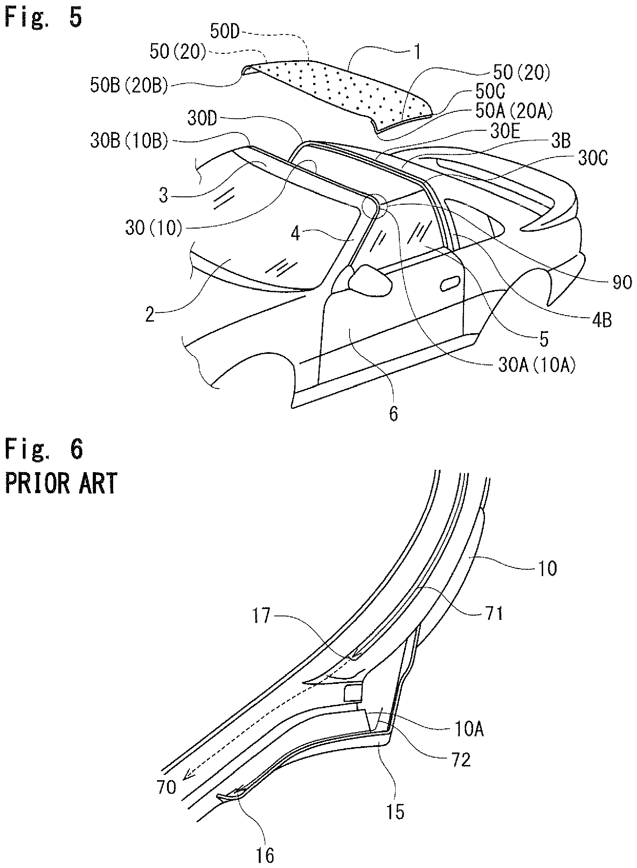

Fig. 5 is an external view of an open car (convertible car) of a targa top (targa roof) with a roof 1 that is detachable as a non-fixed type roof. In vehicles of this kind, a front pillar weather strip 10 is operatively coupled along a header 3 which extends from upper ends of front pillars 4 on right and left. The header 3 fixes an upper end of a front glass 2. Roof side weather strips 20 are operatively coupled along side ends on right and left of the roof 1.

When the roof 1 is in a closed position, terminal parts 20A, 20B on right and left of the roof side weather strips 20 cover and make elastic contact with corner parts 10A, 10B on right and left of the front pillar weather strip 10 from an outside.

When high pressure water hits a joint on which the terminal parts 20A, 20B of the roof side weather strips 20 make elastic contact with the corner parts 10A, 10B of the front pillar weather strip 10 during car washing, for example, the water 70 may pass through the joint and enter an inner-cabin side.

In this connection, the front pillar weather strip 10 has been disclosed, having a water receiving lip 15 as a dish for receiving water 70 provided on a side surface thereof (see the Japanese examined Patent Publication No. 521 9695 or publication JP2010047194).

According to the structure, as shown in Fig. 6, when water 72 passes through the positions of elastic contact between the corner parts 10A, 10B of the front pillar weather strip 10 and the terminal parts 20A, 20B of the roof side weather strips 20, the water receiving lip 15 on a lower part receives the water 72. The water 72 is guided to an inside of a hollow part of the front pillar weather strip 10 via a drainage hole 16 on a lower side. The water 72 from the water receiving lip 15 joins water 71 and is drained outside. The water 71 flows along the front pillar weather strip 10 on a side of the header 3 and is guided to the inside of the hollow part via a drainage hole 17.

Unfortunately, however, when high pressure water hits the positions of elastic contact between the corner parts 10A, 10B of the front pillar weather strip 10 and the terminal parts 20A, 20B of the roof side weather strips 20 during the car washing, and a great deal of the water 70 passes through the positions of elastic contact, the water receiving lip 15 alone can not receive the whole of the water 70. As a result, the water 70 may overflow around the drainage hole 16 and enter the inner-cabin side.

In the open cars with soft tops as the non-fixed type roofs also, the water 70 may enter the inner-cabin side from the positions of elastic contact between the corner parts 10A, 10B of the front pillar weather strip 10 and the terminal parts 20A, 20B of the roof side weather strips 20. Especially, when the roof 1 is detachable including targa tops (targa roofs) and T-bar tops (T-bar roofs) which divide the roofs into two equal halves, spaces which appear on the positions of elastic contact between the corner parts 10A, 14B of the front pillar weather strip 10 and the terminal parts 20A, 20B of the roof side weather strips 20 are larger as compared with folding storage type soft tops. As a result, the water receiving lip 15 alone can not receive the whole of the water 70.

Also, the structure necessitates the water receiving lip 15 extra, which protrudes on the side surface of the front pillar weather strip 10 and degrades an appearance.

Accordingly, an object of the present invention is to provide the sealing structures for the non-fixed type roofs which are: capable of preventing the water from entering the inner-cabin sides through the corner parts on which the front pillar weather strips make elastic contact with the roof side weather strips; and excellent in external appearance.

Expressions "front and rear" and "upper and lower" in the specification correspond to "front and rear" sides and "upper and lower" sides of the vehicles, respectively.

### SUMMARY

In order to achieve the above-mentioned object, according to one aspect of the invention, a sealing structure for a non-fixed type roof is provided, the sealing structure including: pillar weather strips (30, 30E) operatively coupled along headers (3, 3B) on front or rear; and a roof side weather strip (50) operatively coupled along side edges on right and left of a roof (1) of a non-fixed type, the headers (3, 3B) extending in a vehicle width direction from upper ends of a front pillar (4) or a rear pillar (4B) of the vehicle with the roof (1), terminal parts (50A, 50B, 50C, 50D) of the roof side weather strip (50) covering and making elastic contact with corner parts (30A, 30B, 30C, 30D) of the pillar weather strips (30, 30E) from an outside when the roof (1) is in a closed position,
said pillar weather strips (30, 30E) on sides of said headers (3, 3B) including: a sub seal (32) which makes elastic contact with a front edge or a rear edge of said roof (1) when the roof (1) is in the closed position; a main seal (33) which makes elastic contact with the front edge or the rear edge of said roof (1) on a position closer to an inside of the vehicle than said sub seal (32) when the roof (1) is in the closed position; and a coupling part (34) substantially having a U-shaped cross section, the coupling part (34) coupling a lower part of said sub seal (32) and a lower part of said main seal (33), the coupling part (34) having a concave channel (35) formed therein;
said pillar weather strips (30, 30E) on sides of said pillars (4, 4B) including: a hollow seal part (37) which makes elastic contact with a top end of a door glass (5) when a door (6) is in a closed position; a side wall (39) which extends downward from the hollow seal part (37); and a seal lip (38) which extends diagonally upward toward an outer-cabin side from an outer-cabin side of the side wall (39), a top end (38a) of the seal lip (38) making elastic contact with an inner-cabin side surface of said door glass (5), characterized in that:
said sub seal (32) connects with said hollow seal part (37), a bottom wall (34c) of said coupling part (34) connects with said side wall (39), and said main seal (33) connects with said seal lip (38), in a manner to couple with each other, respectively;
a wall (100) is vertically formed on said concave channel (35) on the corner parts (30A, 30B, 30C, 30D) of said pillar weather strips (30, 30E), the wall (100) inclines and extends from the bottom wall (34c) of said coupling part (34) to the sub seal (32) on said headers (3, 3B), the wall (100) is unified with the sub seal (32), the terminal parts (50A, 50B, 50C, 50D) of said roof side weather strip (50) make elastic contact with a surface of the wall (100); and
a drainage hole (101) is formed on a back of said wail (100) for guiding water (70) which collects in said concave channel (35) to an inside of said hollow seal part (37) from said drainage hole (101), said drainage hole (101) communicates with the inside of said hollow seal part (37) from said bottom wall (34c).

In addition, according to an aspect of the present invention, an edge (100a) of said wall (100) on a center side in the vehicle width direction extends from a side of said main seal (33) of said coupling part (34) to said sub seal (32).

In addition, according to an aspect of the present invention, an edge (100a) of said wall (100) on a center side in the vehicle width direction extends from a position lower than an upper part of said main seal (33) to said sub seal (32).

In addition, according to an aspect of the present invention, a bead part (60) is formed on a position on the terminal parts (50A, 50B, 50C, 50D) of said roof side weather strip (50), the position on the terminal parts (50A, 50B, 50C, 50D) making elastic contact with said wall (100), the bead part (60) crossing the surface of said wall (100).

In addition, according to an aspect of the present invention, when said roof side weather strip (50) makes elastic contact with the pillar weather strips (30, 30E) on the front or the rear, said bead part (60) runs up from a side of the side wall (39) to a side of the bottom wall (34c) on the surface of said wall (100).

In addition, according to an aspect of the present invention, said roof (1) of the non-fixed type is detachable.

Symbols in parentheses show constituents or items corresponding to the drawings.

According to the present invention, the pillar weather strips are operatively coupled along the headers, the headers extend in the vehicle width direction from the upper ends of the front pillar or the rear pillar of the vehicle with the roof of the non-fixed type. The pillar weather strips on the sides of the headers include the coupling part which substantially has the U-shaped cross section, which couples the lower part of the sub seal and the lower part of the main seal, and which has the concave channel formed therein. The hollow seal part couples with the sub seal, and the drainage hole is formed which communicates with the inside of the hollow seal part from the bottom wall of the coupling part. Accordingly, the water which collects in the concave channel while the roof is in the closed position is guided to a main drainage canal. In other words, the water which collects in the concave channel is guided to the inside of the hollow seal part from the drainage hole, and is drained outside through the inside of the hollow seal part.

In addition, the pillar weather strips on the sides of the front pillar or the rear pillar have a doubly-sealing structure that the hollow seal part and the seal lip make elastic contact with the door glass from an upper side and a lower side. The water which enters an inner-cabin side (vehicle interior) while lifting or lowering the door glass is received by the seal lip, guided to a side of a base root of the seal lip and drained downward along the side wall.

The bottom wall of the coupling part connects with the side wall, and the main seal connects with the seal lip. Accordingly, in case normal amount of the water passes through a joint while the roof is in the closed position, the water is guided to the side of the base root of the seal lip and drained downward along the side wall. The joint is a position of elastic contact on which the terminal parts of the roof side weather strip make elastic contact with the corner parts of the pillar weather strips.

When high pressure water hits the joint as the position of elastic contact on which the terminal parts of the roof side weather strip makes elastic contact with the corner parts of the pillar weather strips on the front or the rear, during car washing, for example, a great deal of the water may pass through the joint. On the position of elastic contact on which the terminal parts of the roof side weather strip make elastic contact with the corner parts, the wall is vertically formed. The wall inclines and extends to the sub seal on the headers and is unified with the sub seal. Accordingly, the great deal of the strong water is guided inside the concave channel along a surface of the wall, is guided to the inside of the hollow seal part via the drainage hole which has a shape of a tunnel on the back of the wall, and is drained outside through the inside of the hollow seal part. In other words, the water guided into the concave channel along the wall is guided to the main drainage canal, and is drained outside. That is, the normal amount of the water which passes through the joint is drained along the side wall. On the other hand, the great deal of the strong water is partly drained through the main drainage canal via the concave channel for dividing a course of drainage. The structure prevents water from overflowing and entering the inner-cabin side.

Accordingly, the great deal of water which passes through the joint does not overflow the connected part between the bottom wall of the coupling part and the side wall or enter the inner-cabin side.

The structure does not necessitate a water receiving lip of a prior art (Fig. 6) extra, which protrudes on a side surface of the front pillar weather strip, or degrade an appearance.

In addition, the seal lip of the pillar weather strips on the front or the rear on the sides of the pillars connects with the main seal which extends from the sides of the headers and therefore an end of the seal lip is not an open end, which is excellent in the external appearance. Also, while moving the vehicle with the door glass lowered, the seal lip of the invention is subjected to less air resistance than the open end and there arises less zip sound.

In addition, the edge of the wall extends from the side of the main seal of the coupling part to the sub seal. Accordingly, the water guided along the concave channel on the side of the header is dammed up by the wall and is inevitably guided to the drainage hole. Especially, when the wall extends from the position lower than the upper part of the main seal to the sub seal, for example, the main seal makes elastic contact with the roof by higher surface pressure as compared with a wall which extends from a position of the same height as the upper part of the main seal. The structure further prevents entrance of the water from the outer-cabin side.

In addition, the bead part is formed on the position on the terminal parts of the roof side weather strip, the position on the terminal parts making elastic contact with the wall, the bead part crossing the surface of the wall. Accordingly, the great deal of the strong water which passes through the joint easily goes up the wall along the bead, goes beyond the wall, and is guided to the concave channel.

Especially, in case the bead part has length for protruding in a lip shape, the bead part positively prevents entrance of the water from outside and is more preferable. More specifically, when the roof side weather strip makes elastic contact with the pillar weather strips on the front or the rear, the top end of the bead part with the length for protruding in the lip shape bends in an outer-cabin direction or an upper direction. The bead part may be made to run up from the side of the side wall to the side of the bottom wall on the surface of the wall or to descend, with respect to the surface of the wall. In case the bead part is made to run up from the side of the side wall to the side of the bottom wall on the surface of the wall, the strong water goes up the wall along the bead part and is guided inside the concave channel, while water not strong can not go up the wall and is guided to the side of the base root of the seal lip and drained downward along the side wall. Since the water not strong tends to enter the inner-cabin side slowly, draining the water along the side wall without fail fully hampers entrance of the water toward the inner-cabin side. When the door is in the closed position, a tip of the door glass also makes elastic contact with the position of elastic contact on which the terminal parts of the roof side weather strip make elastic contact with the corner parts of the pillar weather strips. Accordingly, it is preferable that the bead part is so close to the tip of the door glass. When the bead part is made to run up, the bead part is much closer to the tip of the door glass than when made to descend, and the bead part as a whole further abuts to the wall and prevents appearance of the space.

The bead part may be formed on the surface of the wall on the side of the front pillar weather strip. But when the roof is open, the bead part exposes, which degrades appearance. Accordingly, the bead part is preferably formed on the side of the corner parts of the roof side weather strip.

The roof of the non-fixed type is detachable including targa tops (targa roofs) and T-bar tops (T-bar roofs). As compared with the soft tops, the detachable roofs have caused problems that: the spaces are larger on the positions of elastic contact between the corner parts of the pillar weather strips and the terminal parts of the roof side weather strips; and larger amount of the water passes through the spaces. In this connection, the wall vertically formed and the drainage hole prevent entrance of the water toward the inner-cabin side. Accordingly, the present invention is especially effective on the detachable roofs including targa tops (targa roofs) and T-bar tops (T-bar roofs).

### BRIEF DESCRIPTION OF THE DRAWINGS

Fig. 1 illustrates a sealing structure for a non-fixed type roof according to an embodiment of the present invention, which is an enlarged perspective view of part 90 in Fig. 5 showing a state that a roof 1 is in a closed position;
Fig. 2(a), Fig. 2(b) are enlarged perspective views of important parts on a side of a front pillar weather strip shown in Fig. 1, of which Fig. 2(b) shows the important part viewed in a direction 110 in Fig. 2(a);
Fig. 3 is an enlarged perspective views of an important part on a side of a roof side weather strip shown in Fig. 1;
Fig. 4 is an I-I line cross section of Fig. 2(b);
Fig. 5 is an external perspective view of an open car of a targa top; and
Fig. 6 is an enlarged perspective view of an important part on a side of a front pillar weather strip according to a prior art.

### DETAILED DESCRIPTION

Referring to the Drawings, a sealing structure for a non-fixed type roof according to an embodiment of the present invention will be described. When constituents or items correspond to those in prior arts, the same symbols are used.

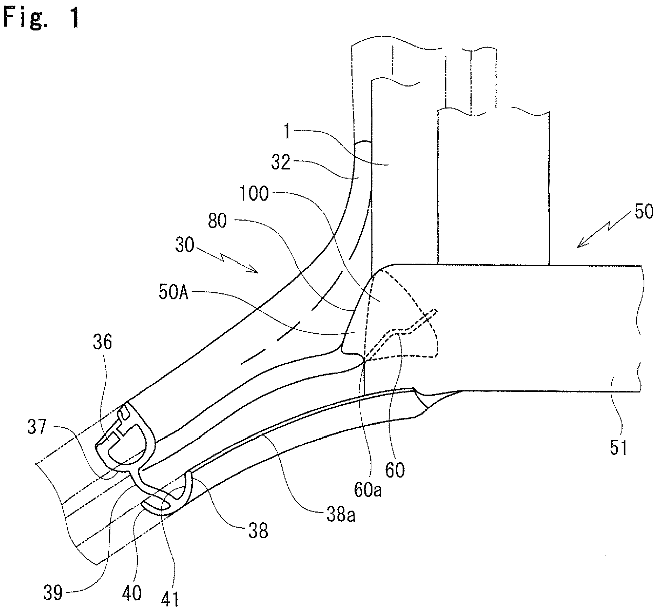

As shown in Fig. 1 and Fig. 5, the sealing structure for the non-fixed type roof according to the embodiment of the present invention is applied on a targa top vehicle with a roof 1 that is detachable as the non-fixed type roof. When the roof 1 is in a closed position, terminal parts 50A, 50B on front sides of a roof side weather strip 50 cover and make elastic contact with corner parts 30A, 30B on upper ends of a front pillar weather strip 30 from an outside. The front pillar weather strip 30 is operatively coupled from a lower end to an upper end of a front pillar 4 and along a header 3, which fixes an upper end of a front glass 2, from the upper end of front pillar 4. The roof side weather strip 50 is operatively coupled along side ends of the roof 1. The corner parts 30A, 30B and the terminal parts 50A, 50B are formed by die molding.

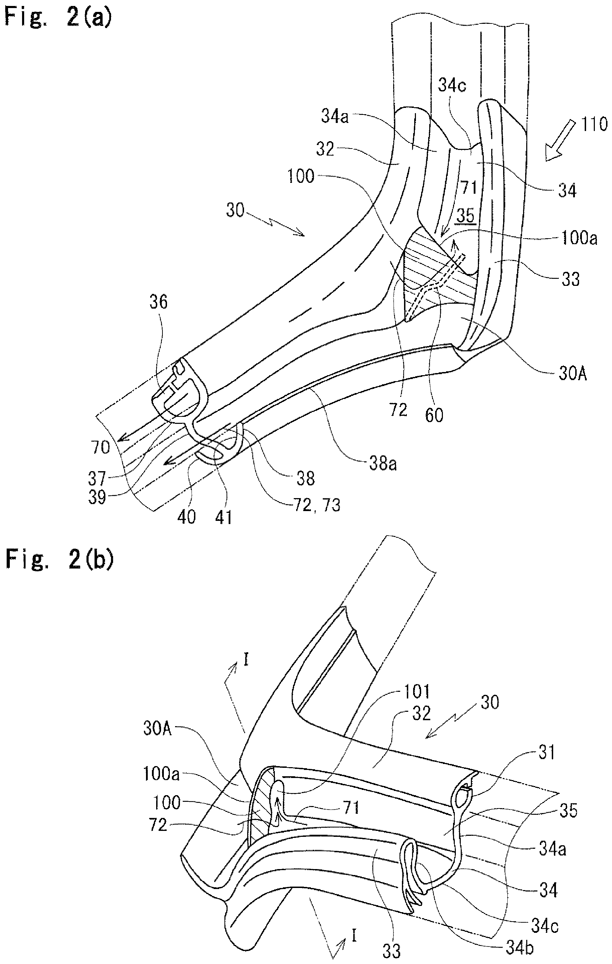

As shown in Fig. 2(b), the front pillar weather strip 30 on a side of a header 3 includes: an installation base member 31; a sub seal 32; a main seal 33; and a coupling part 34. The installation base member 31 is operatively coupled along an upper edge of the header 3 via tape (not shown) (alternatively, the installation base member 31 may be fit in holders including retainers). The sub seal 32 has a hollow shape, is integrally molded with the installation base member 31, and makes elastic contact with a front edge of the roof 1 when the roof 1 is in a closed position. The main seal 33 also makes elastic contact with the front edge of the roof 1, when the roof 1 is in the closed position, on a position closer to an inside of the vehicle (vehicle interior side) than the sub seal 32. The coupling part 34 substantially has a U-shaped cross section, couples a lower part of the sub seal 32 and a lower part of the main seal 33, and has a concave channel 35 formed therein. The main seal 33 also makes elastic contact with lower parts of the terminal parts 50A, 50B of the roof side weather strip 50 operatively coupled on the side edges of the roof 1.

The installation base member 31 has a part thereof split for inserting a core (not shown) for die molding. The main seal 33 may have a lip shape but the main seal 33 of the embodiment has a hollow shape in the same manner as the sub seal 32. The sub seal 32 may also have a lip shape.

The coupling part 34 includes: a first side wall 34a which supports the sub seal 32; a second side wall 34b which supports the main seal 33; a bottom wall 34c which connects a lower end of the first side wall 34a and a lower end of the second side wall 34b. The coupling part 34 is fixed on the header 3 of a vehicle body by a fixing apparatus (clips or bolts, for example) not shown.

As shown in Fig. 2(a), the front pillar weather strip 30 on a side of the front pillar 4 includes: an installation base member 36; a hollow seal part 37; a side wall 39; a seal lip 38; and a lip 40. The installation base member 36 is operatively coupled along a side edge of the front pillar 4 via tape (not shown) (alternatively, the installation base member 36 may be fit in holders including retainers). The hollow seal part 37 is integrally molded with the installation base member 36, and makes elastic contact with a top end of a door glass 5 when the door glass 5 is in a closed position. The side wall 39 extends downward from the hollow seal part 37. The seal lip 38 extends diagonally upward toward an outer-cabin side from an outer-cabin side of the side wall 39. A top end 38a of the seal lip 38 makes elastic contact with an inner-cabin side surface of the door glass 5. The lip 40 extends diagonally upward toward an inner-cabin side from an inner-cabin side of a lower part of the side wall 39. The lip 40 abuts interior material (not shown) including garnish.

The installation base member 36 has a part thereof split for inserting a core (not shown) for die molding. The top end 38a of the seal lip 38 curves upward and makes elastic contact with the inner-cabin side surface of the door glass 5, thereby forming a water receiving part 41 having an eaves-trough-shape on a side of a base root. The water 70 runs off to a lower part of the front pillar 4 through the water receiving part 41 in parallel with (separate from) a water course (main drainage canal) inside the hollow seal part 37. In other words, the water 70 which flows on the water course inside the hollow seal part 37 does not join the water 70 which flows along the water receiving part 41 before reaching the lower part of the front pillar 4.

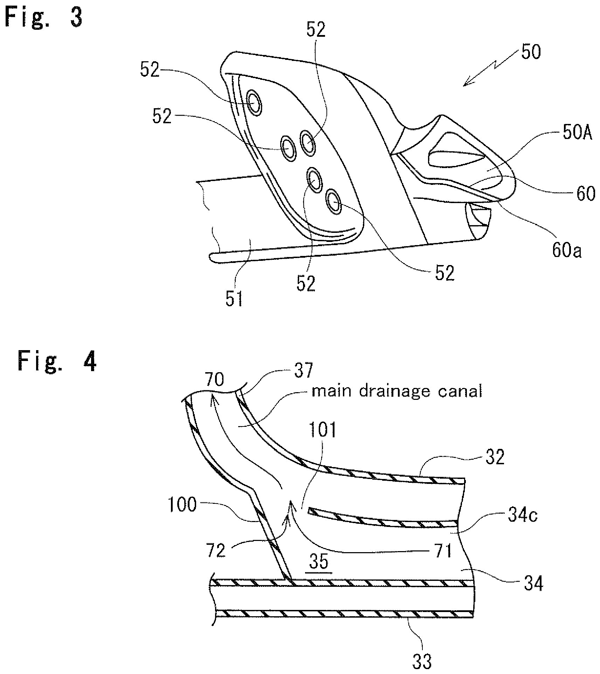

As shown in Fig. 2(a), Fig. 2(b) and Fig. 4, the sub seal 32 on the side of the header 3 connect with the hollow seal part 37 on the side of the front pillar 4 in a manner that a hollow part of the sub seal 32 and a hollow part of the hollow seal part 37 couple with each other. The bottom wall 34c of the coupling part 34 on the side of the header 3 connects with the side wall 39 on the side of the front pillar 4, and the main seal 33 on the side of the header 3 connects with the seal lip 38 on the side of the front pillar 4. The main seal 33 makes elastic contact with the lower parts of the terminal parts 50A, 50B of the roof side weather strip 50 around positions of coupling.

As shown in Fig. 2(a), Fig. 2(b), a wall 100 (shaded portion in Fig. 2(a), Fig. 2(b)) is vertically formed on the corner parts 30A, 30B of the front pillar weather strip 30. The terminal parts 50A, 50B of the roof side weather strip 50 make elastic contact with the wall 100 when the roof 1 is in the closed position. The wall 100 inclines and extends from the bottom wall 34c of the coupling part 34 to the sub seal 32 on the header 3 for closing a concave channel 35 formed by the coupling part 34. An edge of the wall 100 on the side of the sub seal 32 is smoothly unified with an outer-cabin side surface of the sub seal 32 without difference in level. The outer-cabin side surface of the sub seal 32 makes elastic contact with a front edge of the roof 1. An edge of the wall 100 on the side of the main seal 33, as an opposite side to the side of the sub seal 32, extends from a position lower than an upper part of the main seal 33 to an upper part of the sub seal 32. That is, an edge 100a of the wall 100 on a center side in a vehicle width direction extends from the position lower than the upper part of the main seal 33 to the upper part of the sub seal 32. In addition, the edge 100a inclines toward the center side in the vehicle width direction, and is unified with the sub seal 32.

As long as the edge 100a of the wall 100 extends from a position higher than the bottom wall 34c to the side of the sub seal 32, any wall 100 can dam up water 71 which flows along the concave channel 35 and guide the water 71 to a drainage hole 101 to be specified later. Accordingly, the edge 100a of the wall 100 may extend from the same position as the upper part of the main seal 33. But, when the edge 100a of the wall 100 extends from a position lower than the main seal 33, the main seal 33 makes elastic contact with the roof 1 by higher surface pressure and dams up entrance of the water from the outer-cabin side.

The wall 100 of the present embodiment has a shape of a plate. But the wall 100 may be thick in thickness for relieving impact caused by the elastic contact with the terminal parts 50A, 50B of the roof side weather strips 50.

As shown in Fig. 2(b) and Fig. 4, a drainage hole 101 is formed on a back of the wall 100 for guiding the water 71, 72, which collects in the concave channel 35, to an inside of the hollow seal part 37 from the drainage hole 101. The drainage hole 101 communicates with the inside of the hollow seal part 37 from the bottom wall 34c of the coupling part 34 (the hollow part of the hollow seal part 37 and the hollow part of the sub seal 32 couple with each other).

The roof side weather strip 50 includes a hollow part 51 on a side edge of the roof 1. The hollow part 51 makes elastic contact with the door glass 5 which lifts or lowers on a door 6. The roof side weather strip 50 is operatively coupled on a corner part of the roof 1 by fixing apparatuses not shown (clip or bolt, for example) inserted in installation holes 52. In addition, as shown in Fig. 3, a bead part 60 is formed on a position on the terminal parts 50A, 50B of the roof side weather strip 50. The position on the terminal parts 50A, 50B makes elastic contact with the surface of the wall 100 formed on the corner parts 30A, 30B of the front pillar weather strip 30. The bead part 60 crosses the surface of the wall 100.

In the present embodiment, the bead part 60 is formed to run up the surface of the wall 100, with respect to the surface of the wall 100. But the bead part 60 may be made to descent the surface of the wall 100 from the side of the side wall 39 to the side of the bottom wall 34c, with respect to the surface of the wall 100. The bead part 60 may be level with respect to the surface of the wall 100.

In case the bead part 60 is made to run up from the side of the side wall 39 to the side of the bottom wall 34c on the surface of the wall 100, the strong water 70 goes up the wall 100 along the bead part 60 and is guided inside the concave channel 35, while the water 70 not strong can not go up the wall 100 and is guided to the side of the base root of the seal lip 38 and drained downward along the side wall 39. Since the water 70 not strong tends to enter the inner-cabin side slowly, draining the water 70 along the side wall 39 without fail fully hampers entrance of the water 70 toward the inner-cabin side. When the door 6 is in the closed position, a tip of the door glass 5 also makes elastic contact with the position of elastic contact on which the terminal part 50A of the roof side weather strip 50 makes elastic contact with the corner part 30A of the front pillar weather strip 30. Accordingly, it is preferable that the bead part 60 is so close to the tip of the door glass 5. When the bead part 60 is made to run up, the bead part 60 is much closer to the tip of the door glass 5 than when made to descend, and the bead part 60 as a whole further abuts to the wall 100 and prevents appearance of the space. When the bead part 60 is made to descent the surface of the wall 100 from the side of the side wall 39 to the side of the bottom wall 34c, even the water 70 not strong flows from the surface of the wall 100 to the side of the concave channel 35 more smoothly.

In the present embodiment, the wall 100 is made of rubber-like elastic body and is die molded simultaneously with the front pillar weather strip 30, and the bead part 60 is also made of the rubber-like elastic body and is die molded simultaneously with the terminal parts 50A, 50B of the roof side weather strip 50. But the wall 100 and the bead part 60 may be molded separately and adhered on the front pillar weather strip 30 and the roof side weather strip 50 after the molding respectively. In this case, the wall 100 and the bead part 60 are not necessarily made of the rubber-like elastic body. Any rubber-like elastic body which has elasticity of rubber is usable, examples of which include EPDM rubber and thermoplastic elastomer.

According to the sealing structure of the non-fixed type roof according to the embodiment, the front pillar weather strip 30 on the side of the header 3 is operatively coupled along the header 3 which fixes the upper end of the front glass 2 from the upper end of front pillar 4. The front pillar weather strip 30 on the side of the header 3 includes the coupling part 34 which substantially has the U-shaped cross section, which couples the lower part of the sub seal 32 and the lower part of the main seal 33, and which has the concave channel 35 formed therein. The hollow seal part 37 couples with the sub seal 32, and the drainage hole 101 is formed which communicates with the inside of the hollow seal part 37 from the bottom wall 34c of the coupling part 34. Accordingly, the water 71, 72 which collects in the concave channel 35 while the roof 1 is in the closed position is guided to the main drainage canal. In other words, the water 71, 72 which collects in the concave channel 35 is guided to the inside of the hollow seal part 37 from the drainage hole 101, and is drained outside through the inside of the hollow seal part 37.

In addition, the front pillar weather strip 30 on the side of the front pillar 4 has a doubly-sealing structure that the hollow seal part 37 and the seal lip 38 make elastic contact with the door glass 5 from an upper side and a lower side. The water 73 which enters an inner-cabin side while lifting or lowering the door glass 5 is received by the seal lip 38, guided to a side of a base root of the seal lip 38 and drained downward along the side wall 39.

The bottom wall 34c of the coupling part 34 on the side of the header 3 directly connects with the side wall 39 on the side of the front pillar 4, and the main seal 33 on the side of the header 3 directly connect with the seal lip 38 on the side of the front pillar 4. Accordingly, in case normal amount of the water 72 passes through a joint 80 while the roof 1 is in the closed position, the water 72 is guided to the side of the base root of the seal lip 38 and drained downward along the side wall 39. The joint 80 is a position of elastic contact on which the terminal parts 50A, 50B of the roof side weather strip 50 make elastic contact with the corner parts 30A, 30B of the front pillar weather strip 30.

When high pressure water 72 hits the joint 80 as the position of elastic contact, during car washing for example, a great deal of the water 72 may pass through the joint 80. In this connection, the wall 100 is vertically formed on the position of elastic contact on which the terminal parts 50A, 50B of the roof side weather strip 50 make elastic contact with the corner parts 30A, 30B of the front pillar weather strip 30. The wall 100 stretches over the sub seal 32 and the main seal 33, inclines and extends from the position lower than the upper part of the main seal 33 to the sub seal 32 on the header 3, and is unified with the sub seal 32. Accordingly, as shown in Fig. 4, the great deal of water 72 is guided inside the concave channel 35 along a surface of the wall 100, is guided to the inside of the hollow seal part 37 via the drainage hole 101 on the back of the wall 100, and is drained outside through the inside of the hollow seal part 37. In other words, the great deal of water 72 guided into the concave channel 35 along the wall 100 is guided to the main drainage canal, and is drained outside.

Accordingly, the great deal of water 72 which passes through the joint 80 on the position of elastic contact does not overflow the connected part between the bottom wall 34c of the coupling part 34 and the side wall 39 or enter the inner-cabin side.

In the present embodiment, as shown in Fig. 1, Fig. 2, Fig. 3, the bead part 60 is formed to run up the surface of the wail 100. As shown in Fig. 1, the tip of the door glass 5 not shown in Fig. 1 continuously makes elastic contact with the hollow seal part 37 of the front pillar weather strip 30 over the hollow part 51 of the roof side weather strip 50 for sealing. Accordingly, an outer-cabin side end 60a of the bead part 60 is so close to the tip of the door glass 5, and close adherence is improved between the joint 80 and the tip of the door glass 5. As a result, the bead part 60 as a whole further abuts to the wall 100 and prevents appearance of the space. Also, as the close adherence is improved between the joint 80 and the tip of the door glass 5 on the position of the elastic contact on which the space tends to appear most, the sealing performance (waterproof performance, for example) is improved. The "close adherence" is a range that force acts on the bead part 60, which generates from the elastic contact between the tip of the door glass 5 and the hollow seal part 37 of the front pillar weather strip 10 over the hollow part 51 of the roof side weather strip 50. In the present embodiment, the tip of the door glass 5 presses the bead part 60 against the wall 100 via the terminal part 50A of the roof side weather strip 50.

The present embodiment mainly specifies the sealing structure that the terminal part 50A on the front side of the vehicle of the roof side weather strip 50 covers and makes elastic contact with the corner part 30A of the front pillar weather strip 30 on the left side of the vehicle from the outside when the roof 1 is in the closed position. The front pillar weather strip 30 is operatively coupled along the header 3 on the front. The header 3 extends in the vehicle width direction from the upper end of the front pillar 4. The roof side weather strip 50 is operatively coupled along the side edge on the left of the roof 1. In the same manner, the invention is also applicable to the sealing structure that the terminal part 50B on the front side of the vehicle of the roof side weather strip 50 operatively coupled along the side edge on the right of the roof 1 makes elastic contact with the corner part 30B of the front pillar weather strip 30 on the right of the vehicle. Further, the invention is applicable to the following sealing structures that: a terminal part 50C on a rear side of the vehicle of the roof side weather strip 50 operatively coupled along the side edge on the left of the roof 1 makes elastic contact with a corner part 30C of a rear pillar weather strip 30E on the left side of the vehicle, operatively coupled along the header 3B on the rear extending in the vehicle width direction from an upper end of a rear pillar 4B; and a terminal part 50D on a rear side of the vehicle of the roof side weather strip 50 operatively coupled along the side edge on the right of the roof 1 makes elastic contact with a corner part 30D of the rear pillar weather strip 30E on the right side of the vehicle, operatively coupled along the header 3B on the rear extending in the vehicle width direction from the upper end of the rear pillar 4B.

The sealing structure of the present embodiment is applied on the targa top vehicle. But the present invention is also applicable to: T-bar roof vehicles; the retractable roof vehicles of the soft top roofs; and roofs of roof panels and a back window panels at the back of the roof panels, which are folded and put away in a trunk while the roof panels as folded are piled on the back window panels. The present embodiment specifies the front side of the vehicle. But, since the rear sides of the targa top vehicles have the same structure as the front sides, the present invention is also applicable to the position of the elastic contact between the rear pillar weather strip and the roof side weather strip.

## Claims

1. A sealing structure for a non-fixed type roof (1), the sealing structure comprising:
pillar weather strips (30, 30E) operatively coupled along headers (3, 3E) on front or rear; and a roof side weather strip (50) operatively coupled along side edges on right and left of a roof (1) of a non-fixed type, the headers (3, 3E) extending in a vehicle width direction from upper ends of a front pillar (4) or a rear pillar (4B) of the vehicle with the roof (1), terminal parts (50A, 50B, 50C, 50D) of the roof side weather strip (50) covering and making elastic contact with corner parts (30A, 30B, 30C, 30D) of the pillar weather strips (30, 30E) from an outside when the roof (1) is in a closed position,
said pillar weather strips (30, 30E) on sides of said headers (3, 3E) comprising: a sub seal (32) which makes elastic contact with a front edge or a rear edge of said roof (1) when the roof (1) is in the closed position; a main seal (33) which makes elastic contact with the front edge or the rear edge of said roof (1) on a position closer to an inside of the vehicle than said sub seal (32) when the roof (1) is in the closed position; and a coupling part (34) substantially having a U-shaped cross section, the coupling part (34) coupling a lower part of said sub seal (32) and a lower part of said main seal (33), the coupling part (34) having a concave channel (35) formed therein;
said pillar weather strips (30, 30E) on sides of said pillars (4, 4B) comprising: a hollow seal part (37) which makes elastic contact with a top end of a door glass (5) when a door (6) is in a closed position; a side wall (39) which extends downward from the hollow seal part (37); and a seal lip (38) which extends diagonally upward toward an outer-cabin side from an outer-cabin side of the side wall (39), a top end (38a) of the seal lip (38) making elastic contact with an inner-cabin side surface of said door glass (5),
said sub seal (32) connects with said hollow seal part (37), a bottom wall (34c) of said coupling part (34) connects with said side wall (39), and said main seal (33) connects with said seal lip (38), in a manner to couple with each other, respectively; **characterized in that**:
a wall (100) is vertically formed on said concave channel (35) on the corner parts (30A, 30B, 30C, 30D) of said pillar weather strips (30, 30E), the wall (100) inclines and extends from the bottom wall (34c) of said coupling part (34) to the sub seal (32) on said headers (3, 3E), the wall (100) is unified with the sub seal (32), the terminal parts (50A, 50B, 50C, 50D) of said roof side weather strip (50) make elastic contact with a surface of the wall (100); and
a drainage hole (101) is formed on a back of said wall (100) for guiding water which collects in said concave channel (35) to an inside of said hollow seal part (37) from said drainage hole, said drainage hole (101) communicates with the inside of said hollow seal part (37) from said bottom wall (34c).

2. The sealing structure for the non-fixed type roof (1) as claimed in Claim 1, wherein: an edge (100a) of said wall (100) on a center side in the vehicle width direction extends from a side of said main seal (33) of said coupling part (34) to said sub seal (32).

3. The sealing structure for the non-fixed type roof (1) as claimed in Claim 1, wherein: an edge (100a) of said wall (100) on a center side in the vehicle width direction extends from a position lower than an upper part of said main seal (33) to said sub seal (32).

4. The sealing structure for the non-fixed type roof (1) as claimed in any one of Claim 1 to Claim 3, wherein: a bead part (60) is formed on a position on the terminal parts (50A, 50B, 50C, 50D) of said roof side weather strip, the position on the terminal parts (50A, 50B, 50C, 50D) making elastic contact with said wall (100), the bead part (60) crossing the surface of said wall (100).

5. The sealing structure for the non-fixed type roof (1) as claimed in any one of Claim 1 to Claim 4, wherein: when said roof side weather strip (50) makes elastic contact with the pillar weather strips (30, 30E) on the front or the rear, said bead part (60) goes up from a side of the side wall (39) to a side of the bottom wall (34c) on the surface of said wall (100).

6. The sealing structure for the non-fixed type roof (1) as claimed in any one of Claim 1 to Claim 5, wherein: said roof (1) of the non-fixed type is detachable.

## Patentansprüche

1. Dichtungsstruktur für ein nicht feststehendes Dach (1), wobei die Dichtungsstruktur umfasst:
Säulendichtstreifen (30, 30E), die operativ entlang Dachquerträgern (3, 3E) vorne oder hinten gekoppelt sind; und einen dachseitigen Dichtstreifen (50), der operativ entlang Seitenkanten rechts und links eines Dachs (1) eines nicht feststehenden Typs gekoppelt ist, wobei sich die Dachquerträger (3, 3E) in einer Fahrzeugbreitenrichtung ab oberen Enden einer vorderen Säule (4) oder einer hinteren Säule (4B) des Fahrzeugs mit dem Dach (1) erstrecken, Endteile (50A, 50B, 50C, 50D) des dachseitigen Dichtstreifens (50) decken und machen elastischen Kontakt mit Eckteilen (30A, 30B, 30C, 30D) des Säulendichtstreifens (30, 30E) von einer Außenseite, wenn sich das Dach (1) in einer geschlossenen Position befindet,
wobei die Säulendichtstreifen (30, 30E) an Seiten der Dachquerträger (3, 3E) umfassen: Eine Unterdichtung (32), die elastischen Kontakt mit einer vorderen Kante oder einer hinteren Kante des Daches (1) macht, wenn sich das Dach (1) in der geschlossenen Position befindet; eine Hauptdichtung (33), die elastischen Kontakt mit der vorderen Kante oder der hinteren Kante des Daches (1) an einer Position näher einer Innenseite des Fahrzeugs als die Unterdichtung (32) macht, wenn sich das Dach (1) in der geschlossenen Position befindet; und ein Kupplungsteil (34) im Wesentlichen einen U-förmigen Querschnitt aufweist, wobei das Kupplungsteil (34) einen unteren Teil der Unterdichtung (32) und einen unteren Teil der Hauptdichtung (33) kuppelt, wobei das Kupplungsteil (34) einen darin geformten konkaven Kanal (35) aufweist;
wobei die Säulendichtstreifen (30, 30E) an Seiten der Säulen (4, 4B) umfassen: Ein hohles Dichtungsteil (37), das elastischen Kontakt mit einem oberen Ende einer Türscheibe (5) macht, wenn sich eine Tür (6) in einer geschlossenen Position befindet; eine Seitenwand (39), die sich ab dem hohlen Dichtungsteil (37) nach unten erstreckt; und eine Dichtungslippe (38), die sich diagonal aufwärts in Richtung einer Außen-Fahrgastzellenseite ab einer Außen-Fahrgastzellenseite der Seitenwand (39) erstreckt, wobei ein oberes Ende (38a) der Dichtungslippe (38) Kontakt mit einer Innen-Fahrgastzellenseitenfläche der Türscheibe (5) macht,
die Unterdichtung (32) verbindet sich mit dem hohlen Dichtungsteil (37), eine untere Wand (34c) des Kupplungsteils (34) verbindet sich mit der Seitenwand (39), bzw. die Hauptdichtung (33) verbindet sich mit der Dichtungslippe (38), auf eine Weise, um sich miteinander zu kuppeln; **dadurch gekennzeichnet, dass**:
Eine Wand (100) am konkaven Kanal (35) an den Eckteilen (30A, 30B, 30C, 30D) der Säulendichtstreifen (30, 30E) vertikal geformt wird, die Wand (100) neigt sich und erstreckt sich von der unteren Wand (34c) des Kupplungsteils (34) zur Unterdichtung (32) an den Dachquerträgern (3, 3E), wobei die Wand (100) mit der Unterdichtung (32) vereint ist, die Endteile (50A, 50B, 50C, 50D) des dachseitigen Dichtstreifens (50) elastischen Kontakt mit einer Oberfläche der Wand (100) machen; und
ein Wasserablaufloch (101) ist auf einer Rückseite der Wand (100) geformt, um Wasser, das sich im konkaven Kanal (35) sammelt, zu einer Innenseite des hohlen Dichtungsteils (37) ab dem Wasserablaufloch zu führen, wobei das Wasserablaufloch (101) mit der Innenseite des hohlen Dichtungsteils (37) ab der unteren Wand (34c) kommuniziert.

2. Dichtungsstruktur für das nicht feststehende Dach (1) wie in Anspruch 1 beansprucht, wobei:
Sich eine Kante (100a) der Wand (100) auf einer mittigen Seite in der Fahrzeugbreitenrichtung ab einer Seite der Hauptdichtung (33) des Kupplungsteils (34) zur Unterdichtung (32) erstreckt.

3. Dichtungsstruktur für das nicht feststehende Dach (1) wie in Anspruch 1 beansprucht, wobei:
Sich eine Kante (100a) der Wand (100) auf einer mittigen Seite in der Fahrzeugbreitenrichtung ab einer Position niedriger als ein oberer Teil der Hauptdichtung (33) zur Unterdichtung (32) erstreckt.

4. Dichtungsstruktur für das nicht feststehende Dach (1) wie in einem von Anspruch 1 bis Anspruch 3 beansprucht, wobei: Ein Wulstteil (60) an einer Position an den Endteilen (50A, 50B, 50C, 50D) des dachseitigen Dichtstreifens geformt ist, wobei die Position an den Endteilen (50A, 50B, 50C, 50D) elastischen Kontakt mit der Wand (100) macht, wobei das Wulstteil (60) die Oberfläche der Wand (100) kreuzt.

5. Dichtungsstruktur für das nicht feststehende Dach (1) wie in einem von Anspruch 1 bis Anspruch 4 beansprucht, wobei: Wenn der dachseitige Dichtstreifen (50) elastischen Kontakt mit den Säulendichtstreifen (30, 30E) an der Vorderseite oder der Rückseite macht, geht das Wulstteil (60) ab einer Seite der Seitenwand (39) nach oben zu einer Seite der unteren Wand (34c) an der Oberfläche der Wand (100).

6. Dichtungsstruktur für das nicht feststehende Dach (1) wie in einem von Anspruch 1 bis Anspruch 5 beansprucht, wobei: Das Dach (1) des nicht feststehenden Typs abnehmbar ist.

## Revendications

1. Structure d'étanchéité pour un toit (1) de type mobile, la structure d'étanchéité comprenant : des bourrelets d'étanchéité de montants (30, 30E) couplés fonctionnellement le long de linteaux (3, 3E) à l'avant et à l'arrière ; et un bourrelet d'étanchéité latéral du toit (50) couplé fonctionnellement le long de bords latéraux sur la droite et la gauche d'un toit (1) de type mobile, les linteaux (3, 3E) s'étendant dans une direction de la largeur du véhicule, d'extrémités supérieures d'un montant antérieur (4) ou d'un montant postérieur (4B) du véhicule avec le toit (1), des parties terminales (50A, 50B, 50C, 50D) du bourrelet d'étanchéité latéral du toit (50) couvrant et effectuant un contact élastique avec des parties d'angle (30A, 30B, 30C, 30D) des bourrelets d'étanchéité de montants (30, 30E) d'un extérieur lorsque le toit (I) se trouve dans une position fermée,
lesdits bourrelets d'étanchéité de montants (30, 30E) sur les côtés desdits linteaux (3, 3E) comprenant : un sous-ensemble d'étanchéité (32) effectuant un contact élastique avec un bord antérieur ou un bord postérieur dudit toit (1) lorsque le toit (1) se trouve dans la position fermée ; un joint d'étanchéité principal (33) effectuant un contact élastique avec le bord antérieur ou le bord postérieur dudit toit (I) sur une position plus proche d'un intérieur du véhicule que ledit sous-ensemble d'étanchéité (32) lorsque le toit (1) se trouve dans sa position fermée ; et une partie d'accouplement (34) possédant substantiellement une section transversale en U, la partie d'accouplement (34) couplant une partie inférieure dudit sous-ensemble d'étanchéité (32) et une partie inférieure dudit joint d'étanchéité principal (33), la partie d'accouplement (34) possédant un canal concave (35) formé dans celle-ci ;
lesdits bourrelets d'étanchéité de montants (30, 30E) sur les côtés desdits montants (4, 4B) comprenant : une pièce d'étanchéité creuse (37) effectuant un contact élastique avec une extrémité supérieure d'une vitre de porte (5) lorsqu'une porte (6) se trouve dans une position fermée : une paroi latérale (39) s'étendant vers le bas depuis la pièce d'étanchéité creuse (37) ; et une lèvre d'étanchéité (38) s'étendant diagonalement d'un côté d'une cabine extérieure depuis un côté de cabine extérieure de la paroi latérale (39), une extrémité supérieure (38a) de la lèvre d'étanchéité (38) effectuant un contact élastique avec une surface interne côté cabine de ladite vitre de porte (5),
ledit sous-ensemble d'étanchéité (32) se raccordant à ladite pièce d'étanchéité creuse (37), une paroi inférieure (34c) de ladite partie d'accouplement (34) se raccordant à ladite paroi latérale (39), et ledit joint d'étanchéité principal (33) se raccordant à ladite lèvre d'étanchéité (38), de façon à leur permettre de s'accoupler entre eux ,respectivement ;
**caractérisée en ce que** :
une paroi (100) est formée verticalement sur ledit canal concave (35) sur les parties d'angle (30A, 30B, 30C, 30D) desdits bourrelets d'étanchéité de montants (30, 30E), la paroi (100) étant inclinée et déployée de la paroi inférieure (34c) de ladite partie d'accouplement (34) au sous-ensemble d'étanchéité (32) sur lesdits linteaux (3, 3E), la paroi (100) étant unifiée avec le sous-ensemble d'étanchéité (32), les parties terminales (50A, 50B, 50C, 50D) du bourrelet d'étanchéité latéral du toit (50) effectuant un contact élastique avec une surface du toit (100) ; et
un orifice d'évacuation (101) étant formé sur une partie postérieure de ladite paroi latérale (100) pour guider l'eau qui se recueille dans ledit canal concave (35) vers une partie intérieure de ladite pièce d'étanchéité creuse (37) depuis ledit orifice d'évacuation, ledit orifice d'évacuation (101) communiquant avec l'intérieur de ladite pièce d'étanchéité creuse (37) depuis ladite paroi inférieure (34c).

2. Structure d'étanchéité pour le toit (1) de type mobile selon la revendication 1, un bord (100a) de ladite paroi (100) sur un côté central dans une direction de la largeur du véhicule s'étendant d'un côté dudit joint d'étanchéité principal (33) de ladite partie d'accouplement (34) audit sous-ensemble d'étanchéité (32).

3. Structure d'étanchéité pour le toit (1) de type mobile selon la revendication 1, un bord (100a) de ladite paroi (100) sur un côté central dans une direction de la largeur du véhicule s'étendant d'une position inférieure dudit joint d'étanchéité principal (33) au sous-ensemble d'étanchéité (32).

4. Structure d'étanchéité pour le toit (1) de type mobile selon une quelconque des revendications 1 à 3, une partie de cordon (60) étant formée dans une position sur les parties terminales (50A, 50B, 50C, 50D) dudit bourrelet d'étanchéité latéral du toit, la position sur les parties terminales (50A, 50B, 50C, 50D) effectuant un contact élastique avec ladite paroi (100), la partie de cordon (60) traversant la surface de ladite paroi (100).

5. Structure d'étanchéité pour le toit (1) de type mobile selon une quelconque des revendications 1 à 4, ledit bourrelet d'étanchéité latéral du toit (50) effectuant un contact élastique avec lesdits bourrelets d'étanchéité de montants (30, 30E) à l'avant ou à l'arrière, ladite partie de cordon (60) montant d'un côté de la paroi latérale (39) à un côté de la paroi inférieure (34c) sur la surface de ladite paroi (100).

6. Structure d'étanchéité pour le toit (1) de type mobile selon une quelconque des revendications 1 à 5, le toit (1) de type mobile étant amovible.
